Europäisches Patentamt

European Patent Office

Office européen des brevets

(19)

(11) Veröffentlichungsnummer: **0 009 718**

**A1**

(12)　　　**EUROPÄISCHE PATENTANMELDUNG**

(21) Anmeldenummer: **79103521.5**

(22) Anmeldetag: **19.09.79**

(51) Int. Cl.³: **C 02 F 1/52**
**C 01 G 49/14**

(30) Priorität: **03.10.78 DE 2843053**

(43) Veröffentlichungstag der Anmeldung:
**16.04.80 Patentblatt 80/8**

(84) Benannte Vertragsstaaten:
**AT BE CH DE FR GB IT NL SE**

(71) Anmelder: **BAYER Aktiengesellschaft**
**Zentralbereich Patente,Marken und Lizenzen**
**Bayerwerk**
**D-5090 Leverkusen 1(DE)**

(72) Erfinder: **Kyri, Hans, Dr.**
**Gerstenkamp 5**
**D-5000 Köln 80(DE)**

(72) Erfinder: **Dobbers, Jürgen, Dr.**
**Carl-Rumpff-Strasse 51**
**D-5090 Leverkusen 1(DE)**

(54) **Fällmittel zur Entphosphatisierung von Abwasser, Verfahren zu dessen Herstellung und seine Verwendung.**

(57) Die vorliegende Erfindung betrifft ein Fällmittel zur Entphosphatisierung von Abwasser, ein Verfahren zu dessen Herstellung und seine Verwendung. Das Fällmittel enthält 5 - 75 Gew. % aktives Eisen (III) sulfat, 25 - 95 Gew. % aktives Eisen (III) oxyd, sowie gegebenenfalls 0 - 10 Gew. % wasserfreies Magnesiumsulfat und gegebenenfalls einen alkalischen Bestandteil.

EP 0 009 718 A1

BAYER AKTIENGESELLSCHAFT          5090 Leverkusen, Bayerwerk
Zentralbereich                    Je/klu.
Patente, Marken und Lizenzen


Fällmittel zur Entphosphatisierung von Abwasser
Verfahren zu dessen Herstellung und seine Verwendung


Die vorliegende Erfindung betrifft ein Fällmittel zur
Entphosphatisierung von Abwasser sowie ein Verfahren zu
dessen Herstellung  und seine Verwendung.

Abwässer, insbesondere kommunale Abwässer enthalten zum
großen Teil gelöste Phosphate und andere Nährstoffe, die
zu einem stark vermehrten Algenwachstum in stehenden oder
langsam fließenden Gewässern führen. Durch Eliminierung
der gelösten Phosphate kann diese Eutrophierung der
Gewässer unterbunden werden. Der Gehalt an löslichen
Phosphaten in den kommunalen Abwässern liegt üblicherweise im Bereich von 10 bis 30 ppm Phosphor.

Es ist bekannt, daß man den Gehalt an löslichen Phosphaten
in einem Abwasser durch Fällung mit Aluminium- oder

Le A 19 210-Ausland

Eisensalzen sehr stark vermindern kann. Diese Fällungen erfolgen üblicherweise im pH-Bereich von 5,5 bis 7,0 und ergeben flockige, voluminöse Niederschläge, die sich nur sehr schlecht filtrieren lassen. Der Filterschlamm hat üblicherweise nur einen Feststoffgehalt von 1 bis 3 Gewichtsprozent.

Das gereinigte Abwasser hat einen Gehalt von 0,5 bis 3 ppm Phosphor, der sich durch Verdünnung mit dem aufnehmenden Gewässer weiter erniedrigt.

Des weiteren ist eine Phosphat-Eliminierung mittels Calciumhydroxyd im alkalischen Bereich, bei pH-Werten über 9,5,bekannt. Sie führt zu niedrigeren Endkonzentrationen an Phosphat im Ablauf, erfordert aber auch eine nachträgliche Neutralstellung des Abwassers, z.B. durch Einleiten von Kohlendioxid.

Diese bekannten Verfahren ergeben Niederschläge, die sich nur sehr schwer absetzen und auch schlecht filtrieren lassen. Diese Filterschlämme müssen aufkonzentriert werden, bis sie mit einem Feststoffgehalt von ca. 30 % deponiert werden können. Die Nachbehandlung der Schlämme ist daher einer der wichtigsten ökonomischen Faktoren bei kommunalen Kläranlagen.

Bei der großen Bedeutung, die die Phosphateliminierung im Abwasser besitzt, besteht ein dringender Bedarf an Fällmitteln, die günstig einstehen und deren Handhabung keine zusätzlichen Aufwendungen in der Schlammbehandlung verursacht.

Le A 19 210

Es wurde nun gefunden, daß ein speziell hergestelltes Gemisch aus Eisen(III)sulfat und Eisen(III)oxid ein besonders wirksames Fällungsmittel für Phosphationen darstellt.

Gegenstand der vorliegenden Erfindung ist daher ein Fällmittel für die Entphosphatisierung von Abwasser, enthaltend 5 bis 75 Gew.-% aktives Eisen(III)sulfat, 25 bis 95 Gew.-% aktives Eisen(III)oxid, sowie ggf. 0 bis 10 Gew.-% wasserfreies Magnesiumsulfat und ggf. einen alkalischen Bestandteil.

Ein weiterer Gegenstand der vorliegenden Erfindung ist ein Verfahren zur Entphosphatisierung von Abwasser, welches dadurch gekennzeichnet ist, daß das Abwasser mit einem Fällmittel, enthaltend 5 bis 75 Gew.-% aktives Eisen(III)sulfat, 25 bis 95 Gew.-% aktives Eisen(III)-oxid, sowie 0 bis 10 Gew.-% wasserfreies Magnesiumsulfat und ggf. einen alkalischen Bestandteil bei einem pH-Wert zwischen ca. 4,5 bis ca. 8,5 behandelt wird.

Die Verwendung des obengenannten Fällmittelgemisches zur Entphosphatisierung von Abwasser ist gleichfalls Gegenstand der vorliegenden Anmeldung.

Nach einem bekannten Verfahren wird Eisen(II)sulfatheptahydrat, ein Abfallprodukt bei der Herstellung von Titandioxid, zunächst zum Monohydrat entwässert und anschließend in einem Ofen unter Sauerstoffzufuhr auf Temperaturen über ca. 800°C erhitzt. Hierbei zersetzt sich das Eisen(II)sulfat zu Schwefeldioxid und Eisen(III)-oxid. Das Restprodukt enthält üblicherweise weniger als

Le A 19 210

- 4 -

ca. 6 % lösliche Sulfate und weniger als 3 % Eisen(III)-sulfat.

Der Gehalt an löslichem Eisen(III)sulfat im Abbrand kann gesteigert werden, wenn die Temperatur bei der Abröstung erniedrigt wird. Obwohl der Gehalt an Eisen(III)sulfat nicht nur von der Temperatur, sondern auch von der Verweilzeit im Ofen abhängt, lassen sich bei jedem Ofentyp Bedingungen einstellen, bei denen ein Röstprodukt mit ca. 5 bis 75 % Eisen(III)sulfat-Anteil entsteht. Es wurde gefunden, daß ein solches aktives Röstprodukt ein ungewöhnlich wirkungsvolles Fällungsmittel für Phosphationen aus wässrigen Lösungen darstellt. Ein Röstprodukt mit z.B. 18,5 Gew.-% Eisen(III)sulfat ergibt beim Einrühren in eine wässrige Lösung von Natriumdihydrogenphosphat ein Filtrat, das nur 0,5 bis 3 ppm Phosphor enthält. Dies entspricht etwa 80 bis 95 % der errechneten Kapazität, bezogen auf Eisen(III)sulfat, wenn in der Fällung ein Verhältnis von Eisen zu Phosphor wie 1,5 zu 1 angenommen wird.

Erfindungsgemäß ist es wichtig, ein aktives Fällmittelgemisch zu verwenden, da z.B. ein Gemisch aus 75 Gew.-% Eisen(III)oxid von Pigmentqualität und 25 Gew.-% handelsüblichem Eisen(III)sulfat bei dem gleichen Fällungsversuch nur eine Fällkapazität von 30 bis 40 %, bezogen auf die Menge des im Gemisch enthaltenen Eisen(III)sulfates zeigt. Vorzugsweise wird daher bei der vorliegenden Erfindung ein unvollständig abgerösteter, aktiver Abbrand eingesetzt.

Gegebenenfalls kann das aktive Fällmittel noch 0 bis 10 Gew.-% wasserfreies Magnesiumsulfat enthalten.

Le A 19 210

Phosphatfällungen mit gelösten Eisen(III)salzen ergeben einen sehr feinteiligen und flockigen Niederschlag. Überraschenderweise ergibt die gleiche Fällung mit dem oben erwähnten Röstprodukt mit einem Gehalt von 18,5 Gew.-% Eisen(III)sulfat einen rasch sedimentierenden Niederschlag. Der abfiltrierte Niederschlag enthält im nassen Zustand ca. 30 Gew.-% Feststoffe und kann z.B. ohne weitere Nachbehandlung deponiert werden.

Vorzugsweise wird die Fällung bei pH-Werten zwischen ca. 5,5 und 8, besonders bevorzugt zwischen 6 und 7,5 vorgenommen.

Mit einer Variante lässt sich die Fällwirkung des erfindungsgemäßen Fällmittels sowohl hinsichtlich der Kapazität als auch der niedrigen Endkonzentration an Phosphat noch verbessern. Dafür muß gleichzeitig mit dem Röstprodukt ein alkalischer Bestandteil, vorzugsweise Kalziumoxid bzw. -hydroxid oder Magnesiumoxid bzw. -hydroxid in das zu behandelnde Abwasser eingeführt werden, so daß sich ein pH-Wert von 4,5 bis 8,5 einstellt.

Es ist bekannt, daß aus phosphathaltigen Lösungen mittels Kalziumhydroxid bei pH-Werten über 9,5 Hydroxylapatit ausgefällt werden kann. Das Optimum dieser Fällung liegt bei einem pH-Wert von ca. 10,5. Überraschenderweise arbeitet die vorliegende Verfahrensvariante jedoch am besten im pH-Bereich von 4,5 bis 8,5, vorzugsweise von 6 bis 7,5. Mit dem Verfahren gelingt es, Endwerte von 0,1 bis 0,2 ppm Phosphor im gereinigten Wasser zu erreichen, wenn soviel Eisen(III)sulfat, wie der äquivalenten Menge

Le A 19 210

- 6 -

des in der Lösung enthaltenen Phosphates entspricht, zugesetzt wird.

Ein großer Vorzug der Verfahrensvariante liegt darin,
daß deren beste Wirkung in einem pH-Bereich eintritt,
der keine Neutralstellung des behandelten Abwassers
mehr erfordert. Überraschenderweise tritt bei dem erfindungsgemäßen Verfahren eine weitgehende Klärung des
gereinigten Wassers durch Sedimentation ein, ein Zusatz
von Flockungsmittel ist also nicht notwendig.

Die Phosphatfällung mit dem Abbrand-Gemisch setzt sofort
nach dem Einrühren des erfindungsgemäßen Fällungsmittels
in die phosphathaltige Lösung ein. Sie ist bei einer guten
Durchmischung der Lösung nach einer Verweilzeit von
ca. 15 bis 45 Minuten beendet. Die Fällung ist praktisch
unabhängig von der eingestellten Temperatur.

Die vorstehend beschriebene Entphosphatisierung wässriger
Lösungen ist nicht auf die in kommunalen Abwässern vorkommenden Konzentrationsbereiche beschränkt. Sie lässt
sich z.B. auch mit solchen Lösungen, die relativ hohe
Phosphatgehalte aufweisen, durchführen.

Die Herstellung des erfindungsgemäßen Gemisches aus
Eisen(III)oxid und Eisen(III)sulfat, das gegebenenfalls
noch Magnesiumsulfat enthalten kann, kann von jedem beliebigen Rohstoff ausgehen, der bei einer Aktivierung, z.
B. Abröstung, sowohl Eisen(III)oxid als auch Eisen(III)-
sulfat ergibt. Das erfindungsgemäße Fällungsmittel, Verfahren und die Verwendung ist also nicht nur auf die

Le A 1: 2 0

Spaltprodukte von aus der Titandioxid-Fabrikation
stammenden Abfallstoffen beschränkt. Beispielsweise
kann auch ein scharf getrocknetes Eisen(II)sulfatheptahydrat, das jedoch weitgehend zu Eisen(III) aufoxidiert sein muß,
im Sinne der vorliegenden Erfindung eingesetzt werden.
Auch bei der Entschwefelung von Rauchgasen nach dem
Trockenverfahren mittels Eisen(III)oxid anfallende Endprodukte können für die vorliegende Erfindung verwendet
werden.

Die vorliegende Erfindung soll durch die nachfolgenden
Beispiele noch näher erläutert werden.

Le A 19 210

Beispiel 1 (Vergleichsbeispiel)

Eisen-II-sulfatheptahydrat wurde durch Erhitzen entwässert,
bis es der Zusammensetzung $FeSO_4 \cdot H_2O$ entsprach. Als
Rohstoff für diese Entwässerung wurde ein Eisen-II-
sulfatheptahydrat aus der Reinigung der Aufschlusslösung
von Ilmenit in Schwefelsäure eingesetzt.

Das Monohydrat wurde durch Erhitzen in einem Drehofen
abgeröstet. Die Endtemperatur der Röstung betrug dabei
850 bis 900°C. Zum Aufheizen des Röstgutes wurde im
Ofenraum elementarer Schwefel mit Luftüberschuss verbrannt.
Aus dem Eisen-II-sulfat bildete sich Schwefeldioxid und
Eisen-III-oxid. Eventuell im Eisen-II-sulfat enthaltenes
Magnesiumsulfat verblieb in dem Röstprodukt als wasserfreies Magnesiumsulfat.

Das Röstprodukt bildete ein feinkörniges, rotbraunes
Pulver mit einem Gehalt an löslichen Salzen, der fast vollständig aus den Sulfaten der Nichteisenmetalle gebildet
wurde. Vorzugsweise handelte es sich dabei um Sulfate
des Magnesiums und, in geringem Umfang, des Zinks.

Dieses Röstprodukt besaß als Adsorptions- bzw. Fällmittel
für die Eliminierung von Phosphationen aus Abwasser eine
so geringe Wirkung, daß seine Verwendung für diesen Zweck
nicht in Frage kam.

Le A 19 210

## Beispiel 2

Ein Eisen-II-sulfatmonohydrat wurde nach dem gleichen Verfahren wie in Beispiel 1 abgeröstet, wobei die Endtemperatur im Röstofen 650-700°C betrug. Es entstand ein Röstprodukt, das gegenüber demjenigen aus Beispiel 1 deutlich heller rotbraun gefärbt war und einen Gehalt an löslichem Eisensulfat von etwa 20 bis 25 Gew.-% $Fe_2(SO_4)_3$ aufwies. (Durch Variation von Endtemperatur und Verweilzeit im Ofen kann dieser Gehalt auf Werte zwischen 5 und 75 Gew.-% $Fe_2(SO_4)_3$ eingestellt werden).

Beim Einrühren dieses Röstproduktes mit ca. 20 % $Fe_2(SO_4)_3$ in phosphathaltiges Abwasser trat eine Phosphateliminierung ein, die zwischen 75 und 95 % des theoretischen Wertes für den Gehalt an Eisen-III-sulfat ausmacht, wenn man als Fällprodukt die Verbindung $[Fe(OH)_2]_3 \cdot (PO_4)_2$ annahm.

## Beispiel 3 (Vergleichsbeispiel)

Es wurde ein Gemisch aus wasserfreiem Eisen-III-sulfat und Eisen-III-oxid mit einem Gehalt von 25 Gew.-% Eisen-III-sulfat von Pigmentqualität hergestellt.

Zu 1000 ml einer Lösung mit 10 ppm P wurden bei 20°C 0,4 g dieser Mischung zugegeben und intensiv verrührt. Nach 30 Minuten Verweilzeit des Fällmittels in der Lösung wurde filtriert. In dem Filtrat waren noch 6,3 ppm P enthalten. Da der Gehalt an Eisen-III-sulfat in den 0,4 g Mischung einer Fällkapaztät von 10 mg P entsprach, wurde das darin

Le A 19 210

enthaltene Eisen-III-sulfat nur zu 37 % ausgenützt.

Die gleiche Behandlung von 1000 ml einer Lösung mit 10 ppm P mit 0,8 g der Mischung ergab einen Restgehalt von 1,7 ppm P im Filtrat. Bezogen auf den Gehalt an Eisen-III-sulfat entsprach dies einer Ausnutzung von 41,5 %.

Beispiele 4,5,6

Bei 20°C wurde in ein Wasser mit 15° d.H. und einem Phosphatgehalt entsprechend 10 ppm P ein aktives Röstprodukt mit 18,5 Gew.-% $Fe_2(SO_4)_3$ eingerührt. Nach einer Rührdauer von 30 Minuten wurde im Filtrat der Restgehalt am Phosphat bestimmt. Die Ergebnisse sind in der folgenden Tabelle wiedergegeben.

| | 4 | 5 | 6 |
|---|---|---|---|
| Anfangsgehalt ppm P | 10 | 10 | 10 |
| Röstprodukt g/l | 0,2 | 0,53 | 0,8 |
| Äquivalentmenge $Fe^{III}$ : P = X : 1    X | 0,58:1 | 1,5:1 | 2,3:1 |
| Anteil der theoret. Menge ($Fe^{III}$:P = 1,5:1)  % | 39 % | 100 | 155 % |
| pH-Wert nach Fällung | 6-7 | 6-7 | 6-7 |
| Restgehalt ppm P | 6,3 | 2,0 | 0,4 |

Bei dem Verhältnis $Fe^{III}$ : P = 1,5 : 1 trat ein Restgehalt von 2 ppm P/1 auf, der zur Aufrechterhaltung der biologischen Reinigung notwendig ist. Die Ausnutzung des $Fe_2(SO_4)_3$ aus dem Röstprodukt betrug 80 %.

Durch eine Steigerung der Fällmittelmenge auf 155 % des theoretischen Wertes wurde eine für die Nachfällung ausreichende Endkonzentration an Phosphat erzielt.

Bei 20°C wurde in ein Wasser mit 15°d.H. und einem Phosphatgehalt entsprechend 30 ppm P ein Röstprodukt mit 18,5 Gew.-% $Fe_2(SO_4)_3$ eingerührt. Nach einer Rührdauer von 30 Minuten wurde im Filtrat der Restgehalt an Phosphat bestimmt.

|  | Beispiele | | |
|---|---|---|---|
|  | 7 | 8 | 9 |
| Anfangsgehalt ppm P | 30 | 30 | 30 |
| Röstprodukt g/l | 0,77 | 1,55 | 3,10 |
| Äquivalentmenge $Fe^{III}$ : P | 0,75 | 1,5:1 | 3,0:1 |
| Anteil der theor. Menge ($Fe^{III}$:P = 1,5:1)   % | 50 % | 100 % | 200 % |
| pH-Wert nach der Fällung | 6,5 | 6,2 | 4,3 |
| Restgehalt ppm P | 13,5 | 6,2 | 0,9 |

Bei dem Verhältnis $Fe^{III}$:P = 1,5:1 trat eine Phosphatfällung ein, die 80 % der theoretischen Fällkapazität des im Röstprodukt enthaltenen Eisen-III-sulfates ausmacht.

Le A 19 210

- 12 -

Beispiel 10

1000 ml eines stark sauren Abwassers aus der Herstellung
von Phosphorsäureestern wurden mit 20 %iger Natriumhypochloritlösung oxidiert, bis alle Phosphorverbindungen
als Phosphat vorlagen. Das Abwasser hatte einen Phosphatgehalt der 440 ppm P entspricht.

In das oxidierte Abwasser wurden 22 g Röstprodukt mit
18,5 Gew.-% $Fe_2(SO_4)_3$ und dann Kalkmilch mit 2,5 g
$Ca(OH)_2$ eingerührt. Falls notwendig, wurde der pH-Wert
mittels Säure oder Lauge auf pH 6-7 eingestellt.

Nach einer Rührdauer von 15 Minuten wurde filtriert und
im Filtrat Phosphat bestimmt.

Es war eine Restkonzentration von 1,6 ppm P im
Filtrat verblieben. Es entstanden 75 g nasser Filterschlamm mit einem Feststoffgehalt von 33 Gew.-%.

Beispiele 11, 12, 13, 14, 15 und 16

Bei 20°C wurde in ein Wasser mit 15° d.H und einem
Phosphatgehalt entsprechend 10 ppm P oder 30 ppm P ein
Röstprodukt mit einem Gehalt von 18,5 Gew.-% Eisen-III-
sulfat eingerührt. Anschließend wurde in die Flüssigkeit
Kalkmilch eingerührt. Nach 30 Minuten wurde im Filtrat
der Gehalt an löslichem Phosphat bestimmt.

Le A 19 210

|                          | 11      | 12      | 13      | 14      | 15      | 16      |
|--------------------------|---------|---------|---------|---------|---------|---------|
| Anfangsgehalt ppm P      | 10      | 10      | 30      | 30      | 30      | 30      |
| Röstprodukt g/l          | 0,5     | 0,4     | 1,2     | 1,55    | 1,0     | 1,0     |
| Äquivalentmenge $Fe^{III}$ : P | 1,5:1 | 1,2:1 | 1,2:1 | 1,5:1 | 1:1 | 1:1 |
| Zusatz $Ca(OH)_2$ g/l    | 0,15    | 0,13    | 0,30    | 0,08    | 0,2     | 0,4     |
| pH nach Fällung          | 7-8     | 7       | 6,7     | 7       | 7-8     | 6-7     |
| Restgehalt ppm P         | 0,20    | 0,8     | 0,5     | 2,0     | 0,4 -0,2 | 0,1    |

Beispiel 17:

a) 1000 ml einer Lösung von $NaH_2PO_4.2H_2O$ mit 10.000 ppm P wurden mit einer Lösung von 128 g $FeCl_3.6H_2O$ in 1000 ml Wasser verrührt. Infolge des niedrigen pH-Wertes von pH = 1 trat praktisch keine Fällung ein. Nach Zugabe von 1200 ml einer 1 normalen NaOH-Lösung erreichte das Gemisch einen pH-Wert von 6. Die nunmehr eintretende Fällung war so voluminös, daß das gesamte Gemisch gelartig erstarrte.

b) Die gleiche Phosphatlösung mit 10.000 ppm P wurde auf 2000 ml verdünnt und mit 500 g eines festen Gemisches aus Eisen-III-oxid und Eisen-III-sulfat, mit einem Gehalt von 18,5 Gew.-% $Fe_2(SO_4)_3$, versetzt. Nach dem Verrühren entstand ein Gemisch mit einem pH-Wert von 1. Durch Zugabe von 1 normaler NaOH-Lösung wurde der pH-Wert auf pH=6 eingestellt. Es wurden hierfür 550 ml Natronlauge verbraucht. Durch Zugabe von 650 ml Wasser wurde das Gemisch auf das Volumen der vorhergehenden Fällung mit Eisen-III-chlorid gebracht. Die so entstandene Suspension war dünnflüssig und setzte innerhalb von 2 Stunden 1100 ml
Schlamm ab. In der gleichen Zeit war aus der Eisen-
III-chloridfällung ein Sediment mit einem Volumen
von 3100 ml entstanden.

Le A 19 210

- 15 -

Patentansprüche

1) Fällmittel für die Entphosphatisierung von
Abwasser enthaltend 5 - 75 Gew.-% aktives Eisen(III)-
sulfat, 25 bis 95 Gew.-% aktives Eisen(III)oxid, sowie ggf. 0 bis 10 Gew.-% wasserfreies Magnesiumsulfat und ggf. einen alkalischen Bestandteil.

2) Fällmittel gemäß Anspruch 1, dadurch gekennzeichnet,
daß der alkalische Bestandteil Kalziumoxid und/oder
Kalziumhydroxid und/oder Magnesiumoxid und/oder
Magnesiumhydroxid ist.

3) Verfahren zur Entphosphatisierung von Abwasser,
dadurch gekennzeichnet, daß das Abwasser mit einem
Fällmittel, enthaltend 5 bis 75 Gew.-% aktives Eisen-
(III)sulfat, 25 bis 95 Gew.-% aktives Eisen(III)-
oxid, sowie ggf. 0 bis 10 Gew.-% wasserfreies
Magnesiumsulfat und ggf. einen alkalischen Bestandteil bei einem pH-Wert zwischen ca. 4,5 bis
ca. 8,5 behandelt wird.

4) Verfahren nach Anspruch 3, dadurch gekennzeichnet,
daß die Behandlung mit dem Fällmittel bei einem pH-
Wert zwischen ca. 5,5 bis 8 vorgenommen wird.

5) Verwendung des Fällmittels gemäß Anspruch 1 zur Entphosphatisierung von Abwasser.

Le A 19 210

Europäisches Patentamt
EUROPÄISCHER RECHERCHENBERICHT

0009718
Nummer der Anmeldung

EP 79 10 3521

| | EINSCHLÄGIGE DOKUMENTE | | KLASSIFIKATION DER ANMELDUNG (Int.Cl ) |
|---|---|---|---|
| Kategorie | Kennzeichnung des Dokuments mit Angabe, soweit erforderlich, der maßgeblichen Teile | betrifft Anspruch | C 02 F 1/52 C 01 G 49/14 |
| | DE - A - 2 654 720 (BOLIDEN) * Seite 2; Seite 3, Zeilen 1-11; Seite 4, Zeilen 9-21; Seite 5, letzter Absatz; Seite 6, Absatz 2 - Seite 8, Absatz 1; Seite 9, Beispiel 1 * -- | 1 | |
| A | DE - A - 2 147 999 (F. UHDE) | | |
| A | DE - C - 880 877 (HOECHST) | | |
| A | DE - A - 2 206 523 (AKTIEBOLAGET GULLHOGENS) ---- | | RECHERCHIERTE SACHGEBIETE (Int. Cl. ³) C 02 F 1/52 C 01 G 49/14 |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Grunoen angeführtes Dokument
&: Mitglied der gleichen Patentfamilie. Übereinstimmendes Dokument

Der vorliegende Recherchenbericht wurde für alle Patentansprüche erstellt.

| Recherchenort | Abschlußdatum der Recherche | Prufer |
|---|---|---|
| Den Haag | 08-01-1980 | TEPLY |

EPA form 1503.1   06.78